# FASCICULE DE BREVET EUROPEEN

(11) **EP 2 118 476 B1**
(45) Date de publication et mention de la délivrance du brevet: **18.04.2012**
(21) Numéro de dépôt: 08761803.9
(22) Date de dépôt: 25.01.2008
(51) Int. Cl.: F02K 1/76

(54) **PROCEDE DE CONTROLE DES MOTEURS ELECTRIQUES D'UN INVERSEUR DE POUSSEE**
VERFAHREN ZUR STEUERUNG ELEKTRISCHER MOTOREN EINER SCHUBUMKEHREINHEIT
METHOD FOR CONTROLLING ELECTRIC MOTORS OF A THRUST REVERSER

(30) Priorité: 14.02.2007 FR 0701058
(43) Date de publication de la demande: 18.11.2009
(73) Titulaire: Aircelle, 76700 Gonfreville l'Orcher (FR)
(72) Inventeur: DEHU, Michel, F-31170 Tournefeuille (FR); METEZEAU, Fabrice, F-76290 Montivilliers (FR); LECOSSAIS, Eric, F-76110 Virville (FR); LE GOUELLEC, Gilles, F-75018 Paris (FR); MEURET, Régis, F-78400 Chatou (FR); VIEILLARD, Sébastien, F-77720 La Chapelle Gauthier (FR)
(74) Mandataire: Gaillarde, Frédéric F. Ch.
(86) Numéro de dépôt international: PCT/FR2008/000090
(87) Numéro de publication internationale: WO 2008/110677

(56) Documents cités:
- WO-A-03/010430
- FR-A- 2 872 223

## Description

La présente invention se rapporte à un procédé de contrôle d'un moteur électrique actionnant un capot mobile équipant un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

Cependant, les actionneurs électromécaniques présentent également plusieurs inconvénients qu'il est nécessaire de résoudre pour profiter pleinement des avantages qu'ils apportent en termes de gain de masse et d'encombrement, voir FR-A-2872223.

Un de ces inconvénients majeurs réside dans le fait qu'un moteur électrique ne supporte pas les cas de blocage. En effet, lorsqu'un moteur électrique se trouve accidentellement bloqué, son énergie d'alimentation n'est plus convertie en énergie motrice mais se dissipe sous forme de chaleur ce qui risque d'endommager l'électronique de puissance du moteur ou ses bobinages. Une telle situation est inacceptable dans l'application envisagée et doit être absolument évitée.

Dans un cas d'atterrissage avorté, les capots mobiles doivent pouvoir être refermés en moins de six secondes après déclenchement par le pilote. Il est connu que les contraintes aérodynamiques seront suffisamment basses pour un moteur électrique délivrant 35 N.m seulement environ trois secondes après le déclenchement de la manoeuvre. Un blocage du moteur n'est donc que temporaire.

Le moteur électrique est activé, par exemple, une seconde après le déclenchement. A cet instant, les contraintes aérodynamiques sont encore très supérieures à ce que peut fournir le moteur électrique et celui-ci subit donc un blocage entraînant l'augmentation de sa température. L'intervalle de temps après lequel ces contraintes descendent en dessous de la puissance que peut fournir le moteur électrique ne peut être précisément connu, et un déclenchement tardif entraînerait une perte de temps néfaste étant données les contraintes de six secondes à respecter dans le cas de l'atterrissage avorté. Des contraintes de temps similaires sont également définies pour les autres cas de déploiement et d'escamotage.

Cependant, le capot mobile de l'inverseur doit être maintenu dans la position dans laquelle le moteur est bloqué et ne pas revenir à la position correspondant au début de la séquence sous l'effet des charges externes. Ce maintien en position devra permettre de terminer la séquence dans le sens initial de la commande dès que le blocage aura disparu.

Il convient de noter que le temps d'attente avant de pouvoir activer le moteur électrique en toute sécurité n'est pas précisément connu et dépend des scénarios rencontrés.

La présente invention a pour but de remédier aux inconvénients précédemment évoqués, et consiste pour cela en un procédé de contrôle d'un moteur électrique actionnant un capot mobile équipant un inverseur de poussée pour turboréacteur, caractérisé en ce qu'il comprend les étapes visant à :
- déterminer l'état de fonctionnement du moteur électrique,
- couper l'alimentation du moteur électrique en cas de non fonctionnement de celui-ci pendant une certaine durée,
- réactiver le moteur électrique après une période de repos et répéter les étapes précédentes ou arrêter définitivement celui-ci si ces étapes ont déjà été répétées un nombre prédéfini de fois.

Ainsi, en alternant des périodes de fonctionnement du moteur électrique et des périodes de repos lui permettant de refroidir, la surchauffe du moteur électrique et de l'électronique de puissance est évitée. Ces opérations sont répétées plusieurs fois jusqu'à disparition du blocage et la séquence initiale peut se poursuivre. Dans le cas contraire, si le blocage n'est pas temporaire, le moteur est définitivement arrêté sans avoir subit de surchauffe. Il suffira simplement de le débloquer lors de la maintenance de l'avion une fois celui-ci au sol, mais il ne sera pas nécessaire de remplacer un moteur électrique grillé. Le procédé selon l'invention permet donc de protéger le moteur électrique et son électronique de puissance et d'avoir un volume de maintenance plus faible.

Préférentiellement, la durée de repos et/ou la durée de non fonctionnement sont prédéterminées. Bien évidemment, les valeurs réelles de ces durées dépendent du moteur électrique concerné ainsi que de son alimentation et de son isolation. La détermination du temps maximum d'alimentation en cas de blocage et du temps de refroidissement nécessaire peuvent être aisément déterminés par l'homme du métier.

De manière avantageuse, la durée de repos et/ou la durée de non fonctionnement sont déterminées sur la base de la température du moteur déterminée par un capteur approprié de façon à obtenir une asymptote de la température de l'électronique de puissance et du moteur ou plus simplement par une étude théorique.

Préférentiellement, le procédé selon l'invention comprend une étape supplémentaire visant à analyser un paramètre représentatif de la pression dans la veine du turboréacteur et à fixer la puissance délivrée par le moteur électrique en conséquence. Si l'analyse du paramètre représentatif révèle que seule une certaine puissance devrait être nécessaire pour actionner le capot mobile, le moteur électrique chauffera moins rapidement que s'il lui est demandé de délivrer sa puissance maximum.

De manière avantageuse, le procédé selon l'invention comprend une étape supplémentaire précédant l'arrêt du moteur électrique en cas de non fonctionnement, cette étape visant à commander au moteur électrique de délivrer sa puissance maximale si celle-ci n'était pas déjà appliquée. En effet, l'augmentation de la puissance du moteur permet d'augmenter les chances de débloquer le moteur et de poursuivre la séquence d'ouverture ou de fermeture.

La mise en oeuvre de l'invention sera mieux comprise à l'aide de la description détaillée qui est exposée ci-dessous en regard du dessin annexé dans lequel:
La figure 1 est une vue schématique partielle en perspective d'une nacelle intégrant un inverseur de poussée à grille.
La figure 2 est une représentation schématique des capots mobiles et de leur système d'actionnement.
La figure 3 est un diagramme représentant les étapes de fonctionnement d'un procédé de commande selon l'invention.
La figure 4 est une courbe représentant en fonction du temps, d'une part, la décroissance des efforts résistants liés à la décroissance du régime moteur lors d'une commande de déploiement ou de refermeture d'un inverseur de poussée, et d'autre part, l'activité d'un moteur électrique soumis au procédé de commande selon l'invention.

Avant de décrire en détail un mode de réalisation de l'invention, il est important de préciser que le procédé décrit n'est pas limité à un type d'inverseur en particulier. Bien qu'illustrée par un inverseur à grilles, elle pourra être mise en oeuvre avec des inverseurs de conception différentes, notamment à portes.

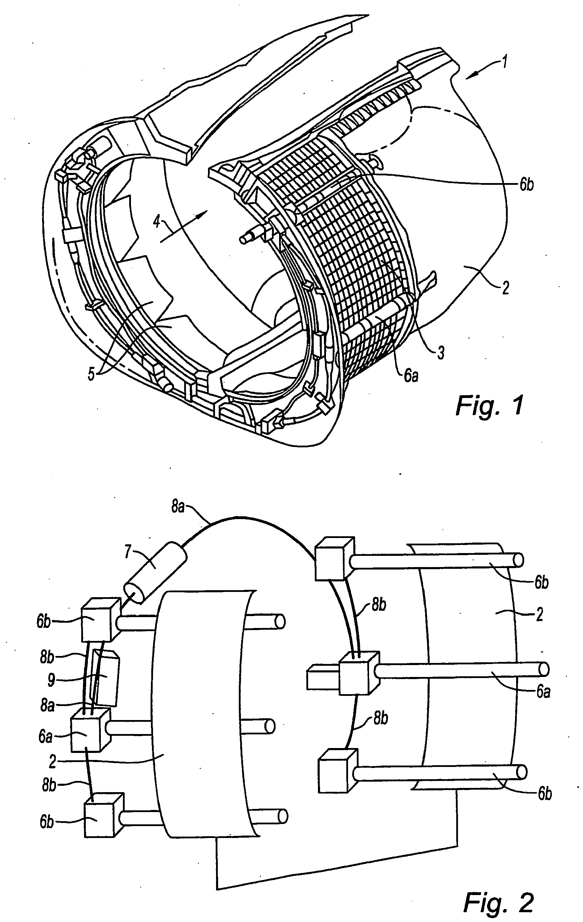

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à une interface de commande 9. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

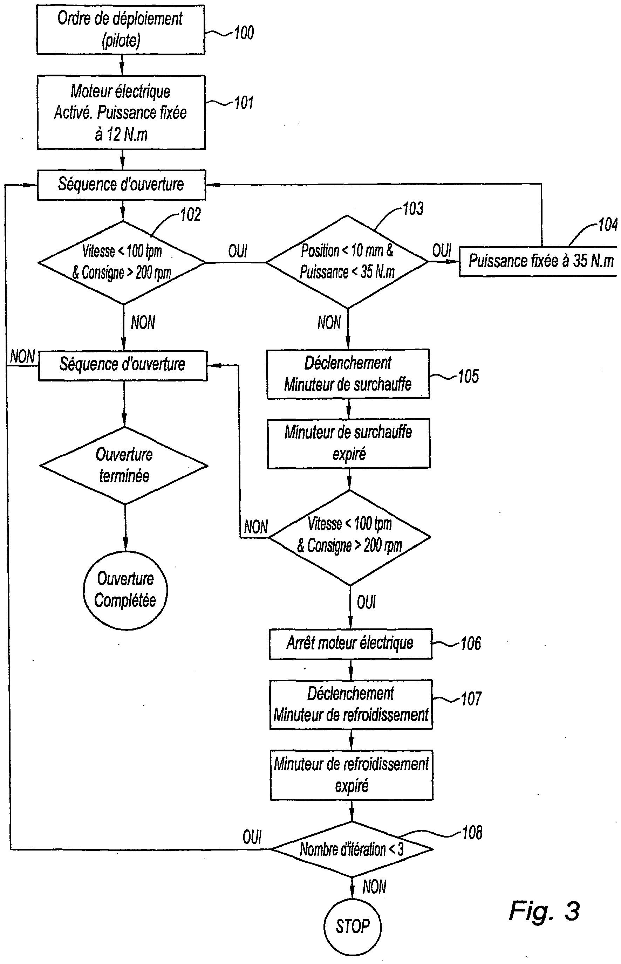

Un diagramme montrant les étapes d'un procédé selon l'invention pour l'ouverture en condition normale de l'inverseur de poussée 1 est représenté à la figure 3.

Initialement, l'ordre 100 est donné par le pilote de déployer l'inverseur. Le moteur électrique 7 est activé au cours d'une étape 101 et suit une séquence d'ouverture déterminée. L'état de fonctionnement du moteur électrique 7 est régulièrement testé pendant la séquence d'ouverture lors d'une étape 102. Si la vitesse de rotation réelle du moteur électrique 7 est inférieure à 100 tours par minute alors qu'il reçoit une consigne de vitesse supérieure à 200 tours par minute, le moteur électrique 7 est considéré comme étant bloqué, et les étapes du procédé selon l'invention sont appliquées.

Tout d'abord, une première étape 103 consiste à analyser le déplacement du capot mobile 2. Si celui-ci a coulissé de moins de 10 mm, alors il est possible que le blocage rencontré soit du à des contraintes trop élevées pour le moteur électrique 7 délivrant un couple moteur initial faible, ici de 10 N.m. Dans ce cas, une consigne fixant au moteur électrique 7 un couple plus élevé, ici de 35 N.m, est alors envoyé par un ordre 104. Dans le cas contraire, le couple moteur reste fixé à 10 N.m.

On pourra rajouter une étape permettant de distinguer entre plusieurs situations, notamment entre un déploiement normal et un déploiement Aborted Take Off (ATO), correspondant à une situation d'urgence et de fortes contraintes mécaniques. Dans le cas d'un déploiement ALD, la puissance du moteur sera immédiatement fixé à sa valeur maximale à savoir 35 N.m, tandis que dans le cas d'un déploiement normal, un premier essai est effectué à une puissance moteur faible mais théoriquement suffisante avant d'appliquer une puissance plus élevé. Il en va de même pour les séquences de fermeture entre une fermeture en situation normale et une fermeture d'urgence en cas d'atterrissage avorté (Aborted Landing, ALD).

Un fois le blocage détecté et le couple adapté fixé, un ordre 105 déclenche un minuteur de surchauffe. Lorsque le minuteur de surchauffe atteint une durée prédéterminée, ici 0,5 seconde au minimum, sans que le moteur électrique 7 ne tourne, alors l'alimentation du moteur électrique 7 est coupée par un ordre 106. Cette étape 106 déclenche un minuteur de refroidissement par un ordre 107. Lorsque le minuteur de refroidissement atteint une durée de refroidissement prédéterminée en fonction du moteur électrique 7 utilisé, le moteur électrique 7 est réactivé par un ordre 108. La réactivation 108 du moteur électrique 7 n'est effectuée qu'un nombre limité de fois. Ce nombre peut être soit prédéterminé et décompté, soit être lié à une certaine durée de fonctionnement de la boucle décrite. Notamment, la réactivation 108 du moteur électrique 7 et le rapport cyclique entre la coupure et la réactivation sont calculés de façon a obtenir une asymptote de la température du moteur et / ou des éléments de contrôle du moteur permettant de maintenir un couple moyen dans le sens de la demande pilote sans atteindre des contraintes de températures dommageables pour les éléments du système tout en couvrant une durée minimum au niveau de l'avion lui permettant de réaliser un « GO AROUND » (tour de piste) et de se reposer.

Lorsque le nombre d'itération est atteint ou que la durée d'exécution de la boucle a expiré, sans qu'il y ait eu déblocage du moteur électrique, alors son alimentation est définitivement coupée. Il est bien évidemment possible de prévoir des messages d'information transmis au pilote de l'avion et les informant qu'une opération de maintenance doit être effectuée.

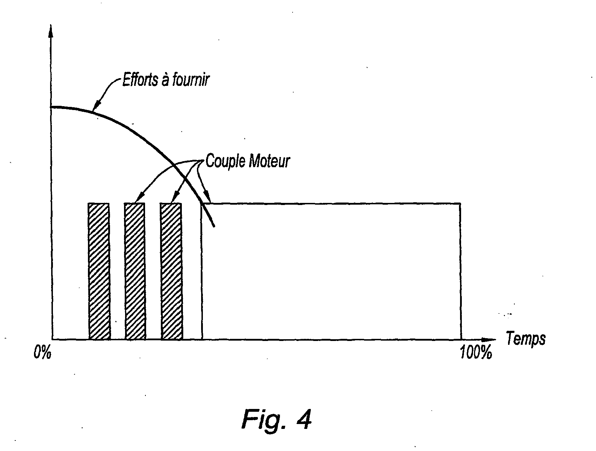

La figure 4 illustre l'application du procédé selon l'invention à la fermeture de l'inverseur de poussée 1 en cas d'atterrissage avorté, à haut régime du turboréacteur. Dans une telle situation, les capots mobiles doivent pouvoir être refermés en moins de 6 secondes après déclenchement par le pilote et le moteur électrique 7 doit délivrer une puissance beaucoup plus importante que dans un cas de fermeture normal pour vaincre les contraintes aérodynamiques élevées dues à un turboréacteur fonctionnant à haut régime.

Cependant, comme représenté sur la courbe de la figure 4, ces contraintes aérodynamiques diminuent assez rapidement. Il est connu que les contraintes aérodynamiques seront suffisamment basses pour un moteur électrique délivrant 35 N.m seulement environ 3 secondes après le déclenchement de la manoeuvre.

Pour refermer les capots mobiles 2 dans une telle situation, deux solutions sont envisageables : Soit utiliser un moteur électrique adapté aux contraintes initiales élevées, soit utiliser un moteur électrique 7 moins puissant et ne l'activer que lorsque les contraintes ont suffisamment diminué. Il convient ici de noter que la masse des équipements est un point essentiel de la construction aéronautique, et que l'inverseur constitue le sous-ensemble de la nacelle le plus important en masse. Il est donc avantageux de chercher à diminuer cette masse au maximum, tout en respectant les normes de sécurité et de résistance. Par conséquent, la solution consistant à utiliser un moteur électrique moins puissant sera préférée.

Toutefois, et comme cela a déjà été expliqué, l'instant d'activation du moteur électrique n'est pas précisément déterminable. Par ailleurs, activer ce moteur électrique trop tôt risquerait de provoquer sa surchauffe si les contraintes à vaincre sont encore trop élevées. Le procédé selon l'invention est alors tout à fait indiqué. Comme représenté sur la figure 4, le moteur électrique 7 est activé, par exemple, 1 seconde après le déclenchement et fonctionne par intermittence jusqu'à ce que les contraintes aérodynamiques aient suffisamment diminuées. Un procédé selon l'invention permet de stopper l'alimentation du moteur électrique 7 après un certain temps de blocage, évitant ainsi sa surchauffe, et de le laisser refroidir avant de renouveler une tentative. Par ailleurs, les écarts par rapport à la décroissance théorique des contraintes aérodynamiques sont également pris en compte, et il est ainsi possible d'utiliser un moteur électrique moins puissant, et donc plus petit et plus léger, tout en minimisant les risques de surchauffe.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de contrôle d'un moteur électrique actionnant un capot mobile équipant un inverseur de poussée pour turboréacteur, **caractérisé en ce qu'**il comprend les étapes visant à :
- déterminer l'état de fonctionnement du moteur électrique,
- couper l'alimentation du moteur électrique en cas de non fonctionnement de celui-ci pendant une certaine durée,
- réactiver le moteur électrique après une période de repos et répéter les étapes précédentes ou arrêter définitivement celui-ci si ces étapes ont déjà été répétées un nombre prédéfini de fois.

2. Procédé selon la revendication 1, **caractérisé en ce que** la durée de repos et/ou la durée de non fonctionnement sont prédéterminées.

3. Procédé selon la revendication 1, **caractérisé en ce que** la durée de repos et/ou la durée de non fonctionnement sont déterminées sur la base de la température du moteur et/ou de l'électronique de puissance déterminée par au moins un capteur approprié.

4. Procédé selon l'une quelconque des revendications 1 à 3, **caractérisé en ce qu'**il comprend une étape supplémentaire visant à analyser un paramètre représentatif de la pression dans la veine du turboréacteur et à fixer la puissance délivrée par le moteur électrique en conséquence.

5. Procédé selon l'une quelconque des revendications 1 à 4, **caractérisé en ce qu'**il comprend une étape supplémentaire précédant l'arrêt du moteur électrique en cas de non fonctionnement, cette étape visant à commander au moteur électrique de délivrer une puissance plus élevée si celle-ci n'était pas déjà appliquée.

6. Procédé selon la revendication 5, **caractérisé en ce que** l'étape supplémentaire n'est appliquée que si le capot mobile a parcouru une course inférieure à une longueur prédéterminée.

## Claims

1. A method for controlling an electric motor actuating a movable hood fitted to a thrust reverser for a turbojet, **characterized in that** it comprises the steps designed to:
- determine the state of operation of the electric motor,
- disconnect the power from the electric motor if the latter does not operate for a certain time,
- reactivate the electric motor after a rest period and repeat the preceding steps or permanently shut down the latter if these steps have already been repeated a predefined number of times.

2. The method as claimed in claim 1, **characterized in that** the period of rest and/or the period of nonoperation are predetermined.

3. The method as claimed in claim 1, **characterized in that** the period of rest and/or the period of nonoperation are determined on the basis of the temperature of the motor and/or of the power electronics determined by at least one appropriate sensor.

4. The method as claimed in any one of claims 1 to 3, **characterized in that** it comprises an additional step designed to analyze a parameter representative of the pressure in the stream of the turbojet and to set the power delivered by the electric motor in consequence.

5. The method as claimed in any one of claims 1 to 4, **characterized in that** it comprises an additional step preceding the shutdown of the electric motor in the event of nonoperation, this step being designed to control the electric motor to deliver a higher power if the latter has not already been applied.

6. The method as claimed in claim 5, **characterized in that** the additional step is applied only if the movable hood has completed a travel of less than a predetermined length.

## Patentansprüche

1. Steuerungsvorrichtung eines Elektromotors, der eine bewegbare Haube betätigt, die eine Schubumkehr für ein Turbotriebwerk ausstattet, **dadurch gekennzeichnet, dass** sie die folgenden Schritte umfasst, die gerichtet sind auf die:
- Bestimmung des Betriebszustands des Elektromotors,
- Unterbrechung der Versorgung des Motors bei Nichtbetrieb desselben während einer bestimmten Dauer,
- Reaktivierung des Elektromotors nach einer Ruhephase und Wiederholung der vorhergehenden Schritte oder endgültige Abschaltung desselben, wenn diese Schritte bereits eine vorbestimmte Anzahl von Malen wiederholt wurden.

2. Verfahren nach Anspruch 1, **dadurch gekennzeichnet, dass** die Dauer der Ruhe und/oder die Dauer des Nichtbetriebs vorbestimmt sind.

3. Verfahren nach Anspruch 1, **dadurch gekennzeichnet, dass** die Dauer der Ruhe und/oder die Dauer des Nichtbetriebs auf der Basis der Temperatur des Motors und/oder der Leistungselektronik bestimmt sind, die von mindestens einem geeigneten Sensor ermittelt wird.

4. Verfahren nach einem der Ansprüche 1 bis 3, **dadurch gekennzeichnet, dass** es einen zusätzlichen Schritt umfasst, der darauf abzielt, einen repräsentativen Parameter des Drucks im Strom des Turbotriebwerks zu analysieren und die folglich vom Elektromotor gelieferte Leistung zu bestimmen.

5. Verfahren nach einem der Ansprüche 1 bis 4, **dadurch gekennzeichnet, dass** es einen zusätzlichen Schritt umfasst, der dem Abschalten des Elektromotors im Fall des Nichtbetriebs vorausgeht, wobei dieser Schritt darauf abzielt, dem Elektromotor zu befehlen, eine höhere Leistung zu liefern, wenn diese nicht bereits angewendet wird.

6. Verfahren nach Anspruch 5, **dadurch gekennzeichnet, dass** der zusätzliche Schritt nur angewendet wird, wenn die bewegbare Haube einen Weg zurückgelegt hat, der kürzer als eine vorbestimmte Länge ist.
